# EUROPÄISCHE PATENTSCHRIFT

(11) **EP 2 303 551 B1**
(45) Veröffentlichungstag und Bekanntmachung des Hinweises auf die Patenterteilung: **30.07.2014**
(21) Anmeldenummer: 09757438.8
(22) Anmeldetag: 28.05.2009
(51) Int. Cl.: B29C 65/44, B29C 65/64

(54) **VERFAHREN ZUR VERBINDUNG ZWEIER KOMPONENTEN**
METHOD FOR JOINING TWO COMPONENTS
PROCÉDÉ DE LIAISON DE DEUX COMPOSANTS

(30) Priorität: 06.06.2008 DE 102008027026
(43) Veröffentlichungstag der Anmeldung: 06.04.2011
(73) Patentinhaber: PARItec GmbH, 82319 Starnberg (DE)
(72) Erfinder: STORCH, Reinhold, 81369 München (DE); LASS, Joseph, 80798 München (DE)
(74) Vertreter: HOFFMANN EITLE
(86) Internationale Anmeldenummer: PCT/EP2009/056525
(87) Internationale Veröffentlichungsnummer: WO 2009/147056

(56) Entgegenhaltungen:
- EP-A- 0 819 515
- JP-A- 6 226 858
- JP-A- S6 011 337
- JP-A- 59 145 112

## Beschreibung

Die Erfindung betrifft ein Verfahren zur Verbindung einer ersten Komponente mit einer zweiten Komponente, wobei die zweite Komponente ein thermoplastisches Material beinhaltet.

Die aus dem Stand der Technik bekannten Methoden zur Verbindung von Komponenten basieren vorwiegend auf Klebeoder Klemmverbindungen. Zur Verbindung von insbesondere flachen Komponenten aus z. B. Silizium, Metall, Glas oder Keramik mit einem Kunststoffkörper werden diese überwiegend in den bzw. auf den Kunststoffkörper geklebt. Eine Vielzahl von Kunststoffsorten können jedoch nicht oder nur nach aufwendiger Vorbehandlung verklebt werden. Zudem benötigt jedes Element, das für medizinische Anwendungen eingesetzt wird, wie z. B. Klebstoffe, spezielle Zulassungen und muss biokompatibel sein. Ausdünstungen des Klebstoffs können zudem zu einer Veränderung oder sogar zur Zerstörung der Bauteile führen. Ein weiterer Nachteil des Klebeverfahrens ist unter Umständen die lange Aushärtezeit des Klebstoffs, sowie dessen genaue Positionierung und Dosierung. So kann z. B. eine ungleichmäßige Verteilung des Klebstoffs zu einer ungleichförmigen und möglicherweise undichten Verbindung der Komponenten führen.

Klemmverbindungen benötigen zusätzliche konstruktive Strukturen, wie z. B. Hinterschnitte, die zur Klemmung dienen. Dies erfordert einen zusätzlichen Aufwand bei der Herstellung und erhöhten Platzbedarf. Zudem übt die Klemmung in den meisten Fällen eine mechanische Dauerbelastung auf die zu verbindenden Bauteile aus, die zu deren Beschädigung oder sogar Zerstörung führen könnte.

Der Erfindung liegt die Aufgabe zugrunde, ein zeitsparendes und kostengünstiges Verfahren zur Verbindung zweier Komponenten zu schaffen, das keine Zusatzstoffe oder -strukturen erfordert.

Diese Aufgabe wird durch ein Verfahren mit den Merkmalen des Anspruchs 1 gelöst. Vorteilhafte Ausführungsformen folgen aus den übrigen Ansprüchen.

Das Verfahren der Erfindung ist im Anspruch 1 beschrieben. Die erste Komponente wird hierbei vorzugsweise flach ausgebildet gewählt, so dass eine Breite der ersten Komponente größer als eine Höhe (Dicke) der ersten Komponente ist. Ein thermoplastisches Material (Thermoplast) ist ein Kunststoff, der sich bei einer Temperatur oberhalb seiner Erweichungstemperatur (oder Glasübergangstemperatur) verformen lässt. Bei Temperaturen oberhalb der Zersetzungstemperatur findet eine thermische Zersetzung des Materials statt. Bei dem Verfahren der Erfindung wird das thermoplastische Material der zweiten Komponente vorzugsweise auf eine Temperatur erwärmt, die 15 bis 150° C über dessen Erweichungstemperatur liegt.

Das Material der ersten Komponente und das thermoplastische Material können hierbei so gewählt werden, dass das thermoplastische Material einen größeren Ausdehnungskoeffizienten (Wärmeausdehnungskoeffizienten) als das Material der ersten Komponente aufweist. In diesem Fall zieht sich das thermoplastische Material beim Abkühlen stärker zusammen als die erste Komponente, wodurch es nach der Abkühlung eine Klemmkraft auf die erste Komponente ausübt, die zusätzlich zum Formschluss zur festen Verbindung der ersten mit der zweiten Komponente beiträgt. Neben dem Ausdehnungskoeffizienten des thermoplastischen Materials und des Materials der ersten Komponente hat auch das Elastizitäts-Modul (E-Modul) des thermoplastischen Materials Einfluss auf die Stärke dieser Klemmkraft und somit die Festigkeit und Dichtigkeit der Verbindung. Je geringer das E-Modul ist, also je elastischer das thermoplastische Material ist, desto geringer ist die auf die erste Komponente wirkende Klemmkraft. Dementsprechend können das thermoplastische Material und das Material der ersten Komponente je nach Einsatzzweck der Verbindung aus erster und zweiter Komponente so gewählt werden, dass ein gewünschter Betrag an Klemmkraft auf die erste Komponente ausgeübt wird. Ist ein hohes Maß an Festigkeit und Dichtigkeit der Verbindung erforderlich, z. B. bei hohen äußeren Drücken, so können die Materialien so gewählt werden, dass eine entsprechend große Klemmkraft wirkt. Andererseits können z. B. bei druckempfindlichen ersten Komponenten solche Materialien verwendet werden, dass nur eine entsprechend geringe Klemmkraft wirkt, so dass eine Beeinträchtigung oder Beschädigung der ersten Komponente verhindert wird.

Wie oben beschrieben, gehen die erste Komponente und die zweite Komponente durch das Verdrängen des erwärmten und somit verformbaren thermoplastischen Materials eine formschlüssige Verbindung ein. Durch das Verdrängen wird das erwärmte thermoplastische Material gegen zumindest einen Teil der ersten Komponente gedrückt und liegt somit an zumindest einem Teil der Oberfläche der ersten Komponente an. Falls diese das thermoplastische Material kontaktierenden Oberflächen der ersten Komponente ein gewisses Maß an Oberflächenrauigkeit aufweisen, findet eine Verzahnung des thermoplastischen Materials mit den rauen Oberflächen der ersten Komponente statt, welche die Festigkeit und Dichtigkeit der Verbindung weiter erhöht. Diese Oberflächenrauigkeit kann z. B. im Herstellungsprozess (z. B. beim Sägen oder Laserschneiden) der ersten Komponente entstehen, so dass kein weiterer Verarbeitungsschritt erforderlich ist, oder in einem zusätzlichen Aufrauungsschritt herbeigeführt oder vergrößert werden. Somit können die Festigkeit und Dichtigkeit der Verbindung auch über den Grad der Oberflächenrauigkeit der entsprechenden Oberflächen der ersten Komponente beeinflusst werden, wobei eine größere Oberflächenrauigkeit eine festere und dichtere Verbindung ermöglicht. Das Verfahren gemäß der Erfindung ist somit verbindungssicher und druckdicht und bietet, insbesondere durch die Kombination des Formschlusses mit der oben beschriebenen Klemmkraft, eine Verbindung mit hoher Festigkeit und Dichtigkeit auch bei hohem äußerem Druck.

Da zur Verbindung der ersten Komponente mit der zweiten Komponente keine Zusatzstrukturen benötigt werden und somit kein zusätzlicher Platzbedarf erforderlich ist, ist das Verfahren gemäß der Erfindung insbesondere für den Einsatz in den Bereichen der Mikrotechnik sehr gut geeignet, wie z. B.: der Mikroelektronik, z. B. für in Kunststoff integrierte RF-ID-Chips oder Mikro-Controller; der Sensorik, z. B. für Sensorelemente in Kunststoffverpackungen, Kleidungsstücken oder Accessoires (z. B. Taschen, Koffer); der Mikromechanik, z. B. zur Befestigung von Beschleunigungssensorelementen oder Drucksensoren in Kunststoff; der Mikrooptik, z. B. zur Einbettung von optischen Linsen oder Leuchtelementen (z. B. LEDs) in Kunststoff; und insbesondere der Mikrofluidik, z. B. zur Integration von Ventilen (Mikroventilen), Mikropumpen, Drucksensoren, Mischerelementen und Sensorik in Lab-on-a-Chip-Systemen.

Des Weiteren ist das Verfahren problemlos für medizinische Anwendungen einsetzbar und ermöglicht kurze Prozesszeiten, da keine Zusatzstoffe, wie z. B. Klebstoffe, eingesetzt werden. Somit werden auch weitere Probleme, die bei der Verwendung von Zusatzstoffen auftreten können, wie z. B. die Komponenten beeinträchtigende Ausdünstungen, die erforderliche genaue Positionierung und Dosierung der Zusatzstoffe sowie deren lange Aushärtezeiten, durch das Verfahren gemäß der Erfindung gelöst.

Vorzugsweise weist die zweite Komponente eine Aussparung auf und wird die erste Komponente zum in Kontakt bringen mit der zweiten Komponente zumindest teilweise in diese Aussparung eingeführt. Dieser Ansatz ermöglicht eine besonders genaue Positionierung der ersten und der zweiten Komponente relativ zueinander und verhindert zuverlässig ein Verschieben der ersten Komponente mit Bezug auf die zweite Komponente während des Verbindungsprozesses. Somit kann eine hohe Positionsgenauigkeit der Verbindung gewährleistet werden, was insbesondere bei Anwendungen in der Mikrotechnik vorteilhaft ist. Hierbei kann die Aussparung direkt bei der Fertigung der zweiten Komponente, z. B. durch Verwendung einer entsprechenden Form bei einem Spritzgussverfahren, oder nachträglich, nach Fertigstellung der zweiten Komponente geschaffen werden, z. B. durch ein entsprechendes Schneide- oder Stanzverfahren.

Bei einer Ausführungsform der Erfindung besteht die erste Komponente aus einem wärmeleitfähigen Material und erfolgt das Erwärmen des thermoplastischen Materials über die erste Komponente. Hierbei ist es vorteilhaft, wenn die Wärmeleitfähigkeit der ersten Komponente größer als die Wärmeleitfähigkeit des thermoplastischen Materials der zweiten Komponente ist und die erste Komponente ein Aspektverhältnis (Höhe (Dicke)/Breite) von weniger als 0,5 aufweist. Durch das Verfahren dieser Ausführungsform wird gewährleistet, dass das thermoplastische Material gezielt in der Umgebung der ersten Komponente erwärmt wird, so dass eine positionsgenaue Verbindung ermöglicht wird. Da das Erwärmen des thermoplastischen Materials über die erste Komponente erfolgt und somit während des Verbindungsprozesses der beiden Komponenten nur die erste Komponente erwärmt werden muss, kann außerdem ein vereinfachter Fertigungsaufbau für das Verbindungsverfahren verwendet werden.

Des Weiteren weist bei dieser Ausführungsform das thermoplastische Material vorzugsweise einen größeren Ausdehnungskoeffizienten (Wärmeausdehnungskoeffizienten) als das Material der ersten Komponente auf. In diesem Fall zieht sich das thermoplastische Material beim Abkühlen stärker zusammen als die erste Komponente, wodurch es nach der Abkühlung eine Klemmkraft auf die erste Komponente ausübt, die zusätzlich zum Formschluss zur festen Verbindung der ersten mit der zweiten Komponente beiträgt.

Bei einer weiteren Ausführungsform der Erfindung erfolgt das Erwärmen des thermoplastischen Materials über die zweite Komponente, wobei vorzugsweise das thermoplastische Material direkt, z. B. durch in Kontakt bringen mit einem erwärmten Element, erwärmt wird. Da bei dieser Ausführungsform die erste Komponente während des Verbindungsprozesses nicht erwärmt werden muss, ist diese insbesondere bei der Verwendung von wärmeempfindlichen ersten Komponenten und bei ersten Komponenten mit einer geringeren Wärmeleitfähigkeit vorteilhaft.

Sowohl das Erwärmen des thermoplastischen Materials als auch das Verdrängen des erwärmten thermoplastischen Materials erfolgt durch einen Stempel, bevorzugt durch einen Heißprägestempel. Da somit für das Erwärmen und Verdrängen des thermoplastischen Materials nur ein Element (d. h. der Stempel) benötigt wird, kann der für das Verfahren gemäß der Erfindung verwendete Fertigungsaufbau, z. B. ein Heißprägeaufbau, einfach gehalten werden. Der Stempel besteht vorzugsweise aus einem wärmeleitfähigen und, zumindest verglichen mit der Härte des thermoplastischen Materials, harten Material, wobei insbesondere Materialien mit einer hohen Wärmeleitfähigkeit, wie z. B. Metalle (z. B. Nickel, Eisen, Kupfer, Aluminium etc.) oder Silizium, vorteilhaft sind. Das Erwärmen des thermoplastischen Materials erfolgt durch Wärmeleitung, indem der auf eine Temperatur oberhalb der Erweichungstemperatur des thermoplastischen Materials erwärmte Stempel entweder mit der ersten Komponente oder mit der zweiten Komponente oder mit beiden Komponenten in unmittelbaren Kontakt gebracht wird. Der mit der oder den Komponenten in Kontakt kommende Teil des Stempels kann hierbei, je nachdem, wie die erste Komponente gestaltet ist und über welche der Komponenten die Erwärmung erfolgt, flächig oder mit einer entsprechenden Strukturierung ausgebildet sein. Das Verdrängen des erwärmten thermoplastischen Materials erfolgt durch einen von dem Stempel auf die erste Komponente, die zweite Komponente oder beide Komponenten ausgeübten Druck, wobei der Stempel auch bei dem Verdrängungsprozess mit der oder den entsprechenden Komponenten in unmittelbarem Kontakt ist.

Bei einer Ausführungsform der Erfindung kommt der Stempel bei dem Erwärmen des thermoplastischen Materials und dem Verdrängen des erwärmten thermoplastischen Materials mit der ersten Komponente in Kontakt. Vorzugsweise kommt der Stempel hierbei nur mit der ersten Komponente in Kontakt, die aus einem wärmeleitfähigen Material besteht. In diesem Fall wird die erste Komponente durch den Stempel erwärmt und gibt Wärme an das thermoplastische Material der zweiten Komponente zumindest in der Umgebung der ersten Komponente ab, wodurch das thermoplastische Material auf eine Temperatur oberhalb seiner Erweichungstemperatur erwärmt wird. Das erwärmte thermoplastische Material wird durch einen von dem Stempel über die erste Komponente auf das Material ausgeübten Druck verdrängt, so dass eine zumindest formschlüssige Verbindung zwischen der ersten Komponente und der zweiten Komponente entsteht.

Bei einer weiteren Ausführungsform der Erfindung kommt der Stempel bei dem Erwärmen des thermoplastischen Materials und dem Verdrängen des erwärmten thermoplastischen Materials mit der zweiten Komponente in Kontakt. Hierbei kommt der Stempel vorzugsweise nur mit dem thermoplastischen Material der zweiten Komponente in Kontakt. In diesem Fall erfolgt das Erwärmen des thermoplastischen Materials direkt über Wärmeleitung zwischen dem erwärmten Stempel und dem thermoplastischen Material. Zur Verdrängung des erwärmten thermoplastischen Materials wird ein Druck von dem Stempel direkt auf das thermoplastische Material ausgeübt.

Des Weiteren kann das Verfahren gemäß der Erfindung auch so ausgeführt werden, dass der Stempel bei dem Erwärmen des thermoplastischen Materials und dem Verdrängen des erwärmten thermoplastischen Materials sowohl mit der ersten als auch mit der zweiten Komponente in Kontakt kommt.

Gemäß der Erfindung kann die zweite Komponente einheitlich aus einem einzelnen thermoplastischen Material oder auch aus zumindest zwei unterschiedlichen Materialien bestehen.

In letzterem Fall sind bei einer Ausführungsform der Erfindung die zumindest zwei Materialien thermoplastische Materialien mit unterschiedlichen Erweichungstemperaturen. Vorzugsweise wird bei dem Verbindungsverfahren dieser Ausführungsform nur das Material mit der niedrigeren Erweichungstemperatur auf eine Temperatur oberhalb seiner Erweichungstemperatur erwärmt. Hierbei kann die zweite Komponente so ausgebildet sein, dass die erste Komponente beim in Kontakt bringen mit der zweiten Komponente auf dem thermoplastischen Material mit der höheren Erweichungstemperatur aufliegt. Da das thermoplastische Material mit der höheren Erweichungstemperatur während des Verbindungsprozesses nicht über seine Erweichungstemperatur erwärmt und somit auch nicht erweicht bzw. verformbar wird, wird es bei dem Verdrängungsschritt nicht verdrängt, sondern behält seine ursprüngliche Form bei. Die Position der ersten Komponente in Richtung senkrecht zu der Auflagefläche zwischen erster Komponente und thermoplastischem Material mit höherer Erweichungstemperatur ist somit fixiert, was eine Verbindung zwischen erster und zweiter Komponente mit hoher Positionsgenauigkeit ermöglicht. Außerdem werden Produktionsparameter, wie z. B. Prägekraft und Prägeweg, falls das Verbindungsverfahren mit einem Heißprägeaufbau durchgeführt wird, konstruktiv begrenzt und wird somit eine vereinfachte Verbindungsprozesskontrolle erreicht. Diese Ausführungsform ist somit insbesondere für die Verbindung mikrotechnischer, vorzugsweise mikrofluidischer, Komponenten, wie z. B. Ventile, sehr gut geeignet. Die zumindest formschlüssige Verbindung zwischen erster und zweiter Komponente erfolgt bei dieser Ausführungsform durch Verdrängen des erwärmten thermoplastischen Materials mit der niedrigeren Erweichungstemperatur.

Bei einer weiteren Ausführungsform der Erfindung ist nur eines der zumindest zwei Materialien der zweiten Komponente ein thermoplastisches Material. Als nicht-thermoplastische Materialien können z. B. Metalle (z. B. Nickel, Eisen, Kupfer, Aluminium etc.), Keramiken, nicht-thermoplastische Kunststoffe etc. verwendet werden. Ähnlich zu der oben beschriebenen Ausführungsform kann die zweite Komponente so ausgebildet sein, dass die erste Komponente beim in Kontakt bringen mit der zweiten Komponente auf dem nichtthermoplastischen Material aufliegt. Da das nicht-thermoplastische Material während des Verbindungsprozesses nicht erweicht bzw. verformbar wird, ergeben sich auch bei der vorliegenden Ausführungsform die oben bereits im Detail beschriebenen Vorteile.

Gemäß dem Verfahren der Erfindung kann die zweite Komponente ein elektrisch leitfähiges Material, wie z. B. eine konventionelle Leiterplatte, enthalten, das durch die Verbindung der ersten Komponente mit der zweiten Komponente eine elektrische Verbindung mit der ersten Komponente, z. B. mittels Flip-Chip-Bonding, eingeht. Diese Verbindung ermöglicht einen elektrischen Anschluss der ersten Komponente an externe elektrische oder elektronische Geräte (z. B. Strom- oder Spannungsquellen, Strom- oder Spannungsmessgeräte etc.) und ist somit insbesondere für Anwendungen in der Mikrotechnik, z. B. bei der Verwendung von Mikrochips, Mikro-Controllern, Mikrosensoren, LEDs, Mikropumpen oder -ventilen etc. als erster Komponente vorteilhaft.

Vorzugsweise besteht die erste Komponente aus Silizium oder aus Metall oder aus Glas oder aus Keramik. Das Material kann hierbei je nach Anwendungsbereich und -zweck der ersten Komponente ausgewählt werden. Wie oben bereits erklärt, kann dann, abhängig von dem Material der ersten Komponente, das thermoplastische Material der zweiten Komponente so gewählt werden, dass nach Fertigstellung der Verbindung ein gewünschtes Maß an Klemmkraft auf die erste Komponente wirkt. Als thermoplastisches Material kann z. B. Polycarbonat (PC), Polymethylmethacrylat (PMMA), Polyvinylchlorid (PVC), Polyoxymethylen(POM), Cyclo-Olefin-Copolymere (COC), Polyphenylensulfid (PPS), Polyethersulfon (PES), Polyetherimid (PEI) und Polyetherketone (PEEK) verwendet werden. Je nach Wärmeleitfähigkeit und Stabilität des Materials der ersten Komponente, kann das Erwärmen des thermoplastischen Materials und das Verdrängen des erwärmten thermoplastischen Materials über die erste Komponente, die zweite Komponente oder beide Komponenten erfolgen.

Vorzugsweise ist die erste Komponente eine mikrofluidische Komponente, bevorzugt ein Ventil (Mikroventil). Das Verfahren gemäß der Erfindung ist aber nicht auf solche Anwendungen beschränkt, sondern kann prinzipiell in allen Bereichen der Technik, insbesondere der Mikrotechnik, eingesetzt werden, in denen eine stabile Verbindung zwischen zwei Komponenten erforderlich ist.

Nachfolgend wird die Erfindung rein beispielhaft anhand der beigefügten Figuren beschrieben, wobei
Figuren 1a und 1b schematische Darstellungen sind, die das Verfahren gemäß der Erfindung nach einer ersten Ausführungsform veranschaulichen;
Figuren 2a und 2b schematische Darstellungen sind, die das Verfahren gemäß der Erfindung nach einer zweiten Ausführungsform veranschaulichen;
Fig. 3 eine schematische Darstellung ist, die einen Schritt des Verfahrens gemäß der Erfindung nach einer dritten Ausführungsform veranschaulicht;
Fig. 4 eine schematische Darstellung ist, die einen Schritt des Verfahrens gemäß der Erfindung nach einer vierten Ausführungsform veranschaulicht;
Figuren 5a und 5b schematische Darstellungen sind, die das Verfahren gemäß der Erfindung nach einer fünften Ausführungsform veranschaulichen;
Figuren 6a und 6b schematische Darstellungen sind, die das Verfahren gemäß der Erfindung nach einer sechsten Ausführungsform veranschaulichen;
Figuren 7a und 7b schematische Darstellungen sind, die das Verfahren gemäß der Erfindung nach einer siebten Ausführungsform veranschaulichen;
Fig. 8 eine Querschnittsansicht einer nach dem Verfahren der Erfindung gemäß der ersten Ausführungsform hergestellten Verbindung zweier Komponenten zeigt;
Fig. 9 eine Querschnittsansicht einer weiteren nach dem Verfahren der Erfindung gemäß der ersten Ausführungsform hergestellten Verbindung zweier Komponenten zeigt; und
Figuren 10 bis 14 Diagramme der gemessenen Leckrate in Abhängigkeit von der Temperatur für gemäß dem Verfahren der Erfindung hergestellte Verbindungen aus einem unstrukturierten Siliziumchip und unterschiedlichen thermoplastischen Materialien zeigen.

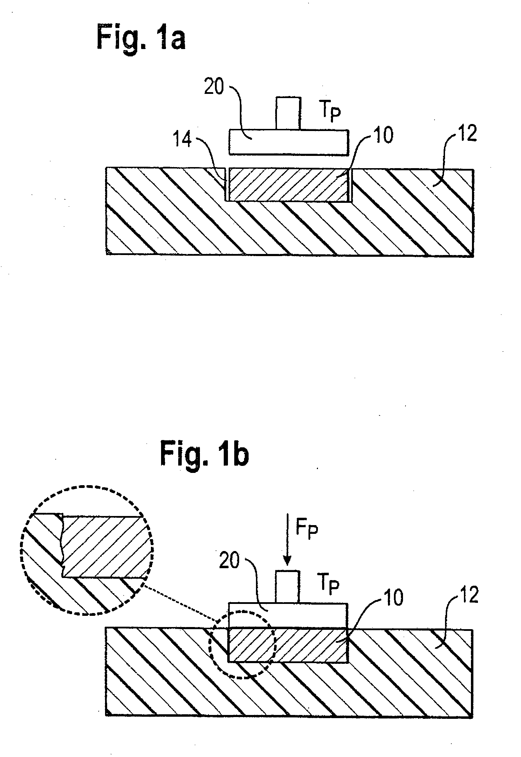

Figuren 1a und 1b sind schematische Darstellungen, die das Verfahren gemäß der Erfindung nach einer ersten Ausführungsform veranschaulichen, wobei die Figuren Querschnittsansichten erfindungsgemäßer erster 10 und zweiter Komponenten 12 sowie eines erfindungsgemäßen Stempels 20 zeigen. Die erste Komponente 10 ist als ein Siliziumchip, der durch Sägen oder Laserschneiden aus einem Siliziumwafer hergestellt wurde, mit seitlichen Abmessungen von 3x3 mm² und einer Dicke (in Bewegungsrichtung des Stempels 20, siehe F_{P} in Fig. 1b) von 1 mm ausgebildet. Der Siliziumchip kann hierbei insbesondere z. B. als ein mikroelektronisches Bauteil (mit darauf angeordneten elektronischen Elementen, wie z. B. Transistoren, Dioden etc.) oder eine mikrofluidische Komponente, wie z. B. ein Ventil, ein Sensor etc. gestaltet sein. Silizium ist insbesondere für die Verwendung als erste Komponente 10 bei dem Verfahren nach dieser ersten Ausführungsform gut geeignet, da es ein stabiles Material mit einer hohen spezifischen Wärmeleitfähigkeit (157 Wm⁻¹K⁻¹) ist. Siliziumchips dieser Art werden auch bei den weiteren hier beschriebenen Ausführungsformen als erste Komponente 10 verwendet. Die zweite Komponente 12 besteht einheitlich aus 3 mm dickem Polycarbonat (PC) mit einer Erweichungstemperatur von 145° C und weist eine Aussparung 14 auf, deren Abmessungen geringfügig größer als die der ersten Komponente 10 bemessen sind. Der Stempel 20 ist auf seiner die erste Komponente 10 kontaktierenden Seite (die untere Seite in Figuren 1a und 1b) flächig ausgebildet und besteht aus Kupfer.

In einem nicht gezeigten ersten Schritt des Verfahrens nach dieser ersten Ausführungsform wird die erste Komponente 10 in die Aussparung 14 der zweiten Komponente 12 eingeführt. Der Stempel 20 wird über einen nicht gezeigten wärmeleitenden Anschluss auf eine Temperatur T_{P} von 180° C erwärmt, die 35° C über der Erweichungstemperatur der zweiten Komponente 14 liegt. Anschließend wird der Stempel 20, wie in Fig. 1b gezeigt, mit der ersten Komponente 10 in Kontakt gebracht, so dass sich die Komponente 10 durch Wärmeleitung von dem Stempel 20 auf die Temperatur T_{P} erwärmt. Somit wird auch das thermoplastische Material der zweiten Komponente 12 in der Umgebung der ersten Komponente 10 durch Wärmeleitung von der ersten Komponente 10 auf die Temperatur T_{P}, also über seine Erweichungstemperatur, erwärmt. Durch einen durch den Stempel 20 auf die erste Komponente 10 senkrecht zu deren Fläche ausgeübten Druck F_{P} (siehe Fig. 1b) von 300 N (typischerweise zwischen 10 und 600 N) wird das an der Kontaktfläche zur ersten Komponente 10 liegende erwärmte thermoplastische Material zum Rand der Komponente 10 hin verdrängt. Die zweite Komponente 12 wird bei diesem Schritt durch eine nicht gezeigte Halterung in ihrer Position fixiert. Das verdrängte thermoplastische Material wird gegen die durch das Sägen oder Laserschneiden aufgerauten Seitenoberflächen der ersten Komponente 10 gedrückt und mit den Oberflächen verzahnt. Dieser Vorgang ist in Fig. 1b in der durch einen gepunkteten Kreis gekennzeichneten vergrößerten Darstellung schematisch gezeigt, wobei der gekrümmte Pfeil den Fluss des erwärmten thermoplastischen Materials veranschaulicht. Somit wird die erste Komponente 10 formschlüssig in die zweite Komponente 12 eingebettet und mit dieser verbunden. Danach wird der Stempel 20 entfernt und das thermoplastische Material auf eine Temperatur unterhalb seiner Erweichungstemperatur abgekühlt. Da der Ausdehnungskoeffizient des Polycarbonats 12 (7×10⁻⁵ K⁻¹) deutlich größer als der des Siliziumchips 10 (2, 5×10⁻⁶ K⁻¹) ist, zieht sich das Polycarbonat 12 beim Abkühlen stärker zusammen als der Siliziumchip 10, wodurch es nach der Abkühlung eine Klemmkraft auf den Chip 10 ausübt. Da das Polycarbonat 12 zudem ein großes E-Modul (2350 Nmm⁻² bei Raumtemperatur) und somit eine geringe Elastizität aufweist (wodurch eine erhebliche Klemmkraft aufgebaut werden kann), trägt diese Klemmkraft zusätzlich zum Formschluss zur festen Verbindung des Chips 10 mit dem Polycarbonat 12 bei.

Durch Änderungen der Größe des angelegten Drucks F_{P} des Stempels 20, der Zeit, in der dieser Druck auf das erwärmte thermoplastische Material wirkt, und der Differenz zwischen der Höhe (in Bewegungsrichtung des Stempels 20, siehe F_{P} in Fig. 1b) der Aussparung 14 und der Dicke der ersten Komponente 10 kann die Position in vertikaler Richtung (Bewegungsrichtung des Stempels 20) der ersten Komponente 10 innerhalb der zweiten Komponente 12 nach erfolgter Verbindung eingestellt werden.

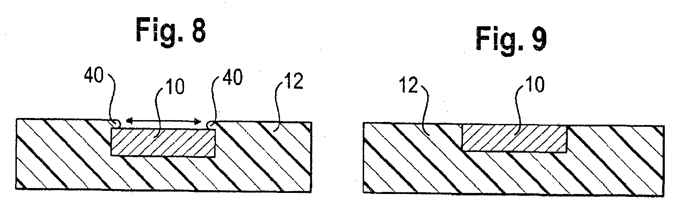

Wie in Fig. 9 gezeigt, kann die erste Komponente 10 z. B. so mit der zweiten Komponente 12 verbunden werden, dass deren obere Oberflächen in einer gemeinsamen Ebene liegen, so dass insgesamt eine ebene, glatte Oberfläche der Verbindung erreicht wird. Ein solcher Aufbau ist z. B. insbesondere dann vorteilhaft, wenn in einem anschließenden Bearbeitungsschritt weitere Komponenten auf der Oberfläche der Verbindung angebracht werden sollen.

Andererseits kann, wie in Fig. 8 gezeigt, die erste Komponente 10 z. B. auch so mit der zweiten Komponente 12 verbunden werden, dass die obere Oberfläche der ersten Komponente 10 in vertikaler Richtung unterhalb der oberen Oberfläche der zweiten Komponente 12 liegt. Bei der Herstellung einer solchen Verbindung nach dem Verfahren nach der ersten Ausführungsform, wird zunächst das verdrängte thermoplastische Material durch den über den Stempel 20 ausgeübten Druck gegen die Seitenoberflächen der ersten Komponente 10 gedrückt, wie oben erläutert. Wird die erste Komponente 10 weiter in die zweite Komponente 12 hineingedrückt, so dass die obere Oberfläche der ersten Komponente 10 unter die der zweiten Komponente 12 bewegt wird, so wird das verdrängte thermoplastische Material oberhalb der oberen Oberfläche der ersten Komponente 10 in Richtung auf die Mitte der ersten Komponente 10 gedrückt. Dadurch entsteht nach erfolgter Abkühlung der Verbindung eine Überlappung 40 (Fig. 8), die um den gesamten Umfang der oberen Öffnung der Aussparung 14 angeordnet ist. Wie in Fig. 8 gezeigt, schließt diese Überlappung 40 die erste Komponente 10 in vertikaler Richtung formschlüssig ein, so dass eine besonders stabile Verbindung zwischen der ersten 10 und der zweiten Komponente 12 erzielt wird. Ein solcher Aufbau ist z. B. insbesondere dann vorteilhaft, wenn die Verbindung bei ihrer Verwendung hohen äußeren Drücken ausgesetzt ist und somit ein besonders hohes Maß an Stabilität aufweisen muss.

Bei dem Verfahren nach der ersten Ausführungsform sowie bei den unten beschriebenen Verfahren nach den weiteren Ausführungsformen wird der Stempel 20 in ähnlicher Weise, wie ein Heißprägestempel bei einem Heißprägeprozess eingesetzt, wobei bei solch einem Prozess keine Verbindung zwischen zwei Komponenten sondern lediglich eine Oberflächenstrukturierung von Bauteilen erreicht wird. Eine Übersicht über das in der Technik bekannte Verfahren des Heißprägens findet sich in dem Artikel "Heißprägen von Mikrostrukturen, T. Wagenknecht, K. Rattba und S. Wagner, wt Werkstattstechnik online, vol. 96, H. 11/12, 2006, Seiten 849-853".

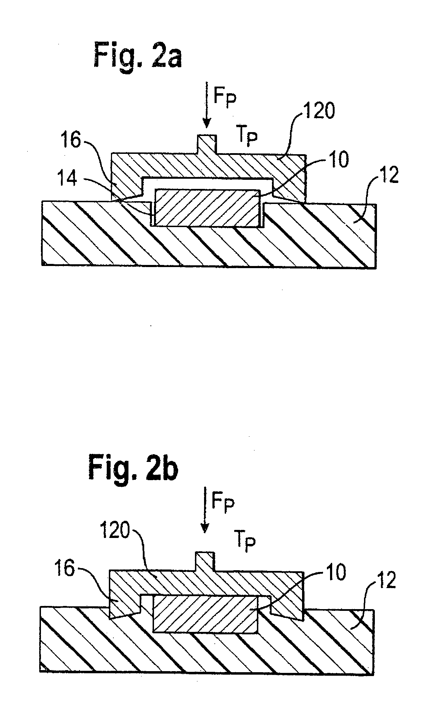

Figuren 2a und 2b veranschaulichen schematisch ein Verfahren gemäß der Erfindung nach einer zweiten Ausführungsform. Die erste 10 und zweite Komponente 12 sind mit denen der ersten Ausführungsform identisch, wobei die Aussparung 14 der zweiten Ausführungsform eine Höhe (in Bewegungsrichtung des Stempels 20, siehe F_{P} in Fig. 2a) aufweist, die geringer als die Dicke der ersten Komponente 10 ist. Somit steht die erste Komponente 10 nachdem sie in die Aussparung 14 eingeführt wurde über die obere Oberfläche der zweiten Komponente 12 hervor. Der Stempel 120 ist, anders als bei der ersten Ausführungsform, auf seiner der ersten 10 und zweiten Komponente 12 zugewandten Seite nicht vollständig flächig ausgebildet, sondern weist einen, seinen äußeren Umfang senkrecht zu seiner Bewegungsrichtung umspannenden Rand 16 mit abgeschrägten unteren Oberflächen (auf der der zweiten Komponente 12 zugewandten Seite) auf, wie in Figuren 2a und 2b gezeigt ist. Der Stempel 120 wird auf eine Temperatur T_{P} von 180° C erwärmt und anschließend mit der zweiten Komponente 12 in Kontakt gebracht (Fig. 2b). Das thermoplastische Material (PC) in der Umgebung des Stempels 120 und der ersten Komponente 10 wird somit über seine Erweichungstemperatur erwärmt und mittels eines angelegten Drucks Fp (300 N, typischerweise 10-600 N) durch die abgeschrägten unteren Oberflächen des Stempelrands 16 gegen die seitlichen Oberflächen der ersten Komponente 10 gedrückt und mit diesen verzahnt (Fig. 2b). Eine Erwärmung der ersten Komponente 10 ist bei der zweiten Ausführungsform nicht erforderlich, so dass diese insbesondere für wärmeempfindliche Komponenten geeignet ist. Nach erfolgter Verbindung der beiden Komponenten 10, 12 wird der Stempel 120 entfernt und thermoplastische Material auf eine Temperatur unterhalb seiner Erweichungstemperatur abgekühlt. Da dieselben Materialien wie bei der ersten Ausführungsform für die erste 10 und zweite Komponente 12 verwendet werden, entsteht auch bei der zweiten Ausführungsform eine stabile Verbindung der Komponenten 10, 12 durch eine Kombination von Klemmkraft und Formschluss.

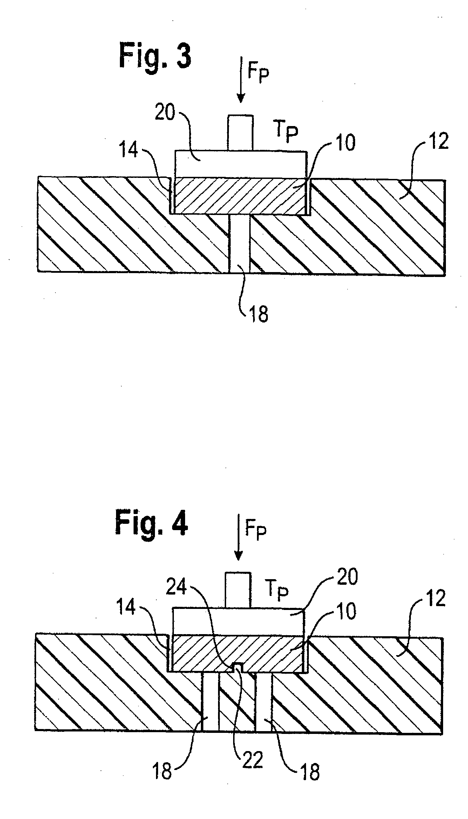

Das in Fig. 3 schematisch gezeigte Verfahren nach der dritten Ausführungsform ist im Wesentlichen mit dem der ersten Ausführungsform identisch, wobei hier die zweite Komponente 12 mit einem Anschluss (Aussparung) 18 versehen ist, der sich von der Aussparung 14 bis zu der Unterseite der zweiten Komponente 12 erstreckt und eine Kommunikation der fest mit der zweiten Komponente 12 verbundenen ersten Komponente 10 mit der Umgebung ermöglicht. Diese Ausführungsform ist insbesondere vorteilhaft, wenn die erste Komponente 10 als fluidische (mikrofluidische) Komponente gestaltet ist. In diesem Fall ermöglicht der (fluidische) Anschluss 18 eine Fluidverbindung der ersten Komponente 10 mit der Umgebung.

Eine nach diesem Verfahren hergestellte Verbindung mit ebener oberer Oberfläche (siehe Fig. 9) aus einem unstrukturierten Siliziumchip 10 und einer zweiten Komponente 12 aus Polycarbonat wurde einem Dichtigkeitstest unterzogen, indem ein Überdruck über den Anschluss 18 an die Unterseite des Siliziumchips 10 angelegt wurde. Die Details des Aufbaus für diesen Dichtigkeitstest sind nachfolgend beschrieben. Hierbei wurde eine druckdichte Verbindung der beiden Komponenten 10, 12 bei angelegten Drücken über 6 bar gemessen.

Das in Fig. 4 schematisch gezeigte Verfahren nach der vierten Ausführungsform ist im Wesentlichen mit dem der dritten Ausführungsform identisch, wobei hier die zweite Komponente 12 mit zwei Anschlüssen (Aussparungen) 18 versehen ist. Um eine druckdichte Abgrenzung zwischen den beiden Anschlüssen 18 zu gewährleisten, werden die erste Komponente 10 mit einer Aussparung 24 (z. B. einer Sägelinie) und die zweite Komponente 12 mit einem Vorsprung 22 versehen. Beim in Kontakt bringen der ersten 10 mit der zweiten Komponente 12 wird der Vorsprung 22 in die Aussparung 24 eingeführt. Anschließend wird durch die Erwärmung und Verdrängung des thermoplastischen Materials der Vorsprung 22 mit den rauen Innenwänden der Aussparung 24 verzahnt und somit druckdicht mit dieser verbunden.

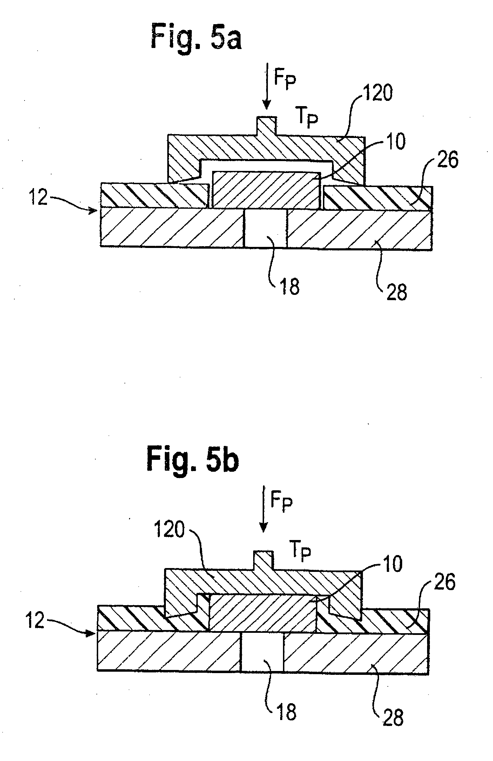

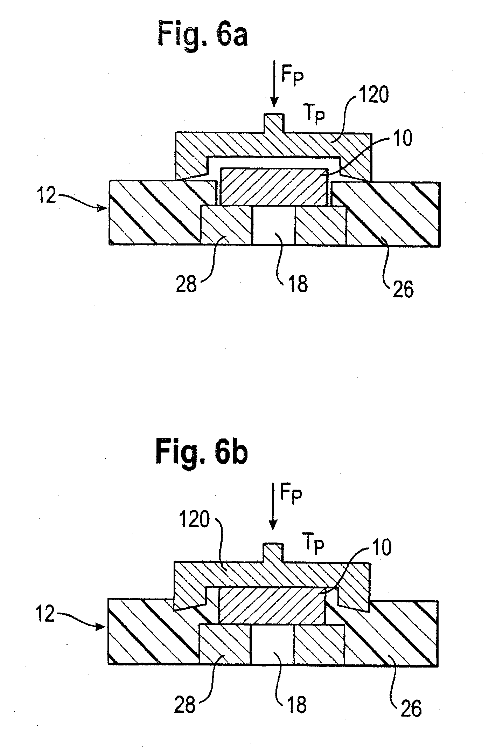

Die in Figuren 5a bis 6b schematisch gezeigten Verfahren der fünften und sechsten Ausführungsform sind im Wesentlichen mit dem der zweiten Ausführungsform identisch, wobei hier die zweite Komponente 12 aus zwei unterschiedlichen Materialien 26, 28 besteht und, ähnlich zu der dritten und vierten Ausführungsform, mit einer Aussparung 18 versehen ist. Das erste Material 26 ist ein Thermoplast (Polycarbonat, PC) und das zweite Material 28 ist Aluminium. Da das zweite Material 28 auch bei der erhöhten Temperatur T_{P} während des Erwärmens nicht verformbar wird und somit während des gesamten Verbindungsprozesses seine ursprüngliche Form beibehält, ist die erste Komponente 10 in vertikaler Richtung (Bewegungsrichtung de Stempels 120, siehe Figuren 5a und 6a) in ihrer Position fixiert. Die Verbindung der ersten 10 mit der zweiten Komponente 12 erfolgt ausschließlich über die Verdrängung des erwärmten ersten Materials 26 (siehe Figuren 5b und 6b). Hierbei kann das erste Material 26 als eine auf dem zweiten Material 28 aufgebrachte Folie ausgebildet sein, wie bei der fünften Ausführungsform (Figuren 5a und 5b), oder das zweite Material 28 als ein Einlegeteil gestaltet sein, das mit dem ersten Material 26 z. B. umspritzt wird (Spritzgießverfahren), wie bei der sechsten Ausführungsform (Figuren 6a und 6b).

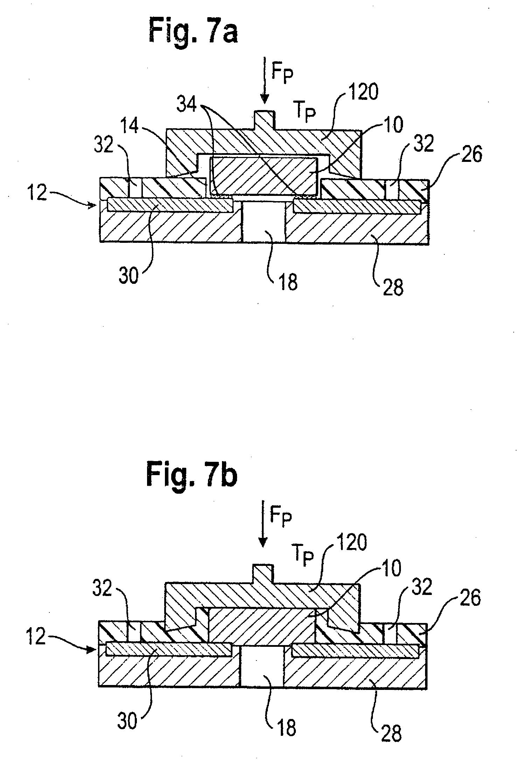

Im Vergleich zu dem Verfahren der fünften Ausführungsform weist bei dem in Figuren 7a und 7b gezeigte Verfahren der siebten Ausführungsform die zweite Komponente 12 zusätzlich ein drittes Material 30 auf, das zwischen dem ersten 26 und dem zweiten Material 28 angeordnet ist. Ein solcher Materialverbund kann z. B durch konventionelle Spritzgießverfahren hergestellt werden. Alternativ kann auch das dritte Material 30 zuerst auf dem zweiten Material 28 aufgetragen werden und dann z. B. das erste Material 26 als Folie auflaminiert werden. Das dritte Material 30 ist elektrisch leitfähig und kann z. B. als kommerziell erhältliche elektrische Leiterplatte ausgebildet sein. Um eine elektrische Kontaktierung des dritten Materials 30 von außen zu ermöglichen (z. B. für einen Anschluss an externe Strom- oder Spannungsquellen oder Strom- oder Spannungsmessgeräte etc.), sind Aussparungen 32 in dem ersten Material 26 vorgesehen. Vor dem Einführen der ersten Komponente 10, die in dieser Ausführungsform mit elektrischen Kontakten versehen ist, in die Aussparung 14 der zweiten Komponente 12, wird ein leitfähiges Klebemittel 34 auf der der ersten Komponente zugewandten Oberfläche des dritten Materials 30 der zweiten Komponente 12 aufgebracht (Fig. 7a). Die erste Komponente 10 wird dann so in die Aussparung 14 eingeführt, dass sie mit ihren elektrischen Kontakten nach unten (also in Richtung auf das dritte Material) über die Klebeschicht 34 auf dem dritten Material 30 aufliegt. Diese Art der Chip-Orientierung, also mit den elektrischen Kontakten nach unten, ist in der Technik bekannt und wird allgemein als "Flip-Chip"-Orientierung bezeichnet.

Wie bei der fünften und sechsten Ausführungsform erfolgt die Verbindung der ersten 10 mit der zweiten Komponente 12 ausschließlich über die Verdrängung des erwärmten ersten Materials 26 (siehe Fig. 7b). Beim Erwärmen und Verdrängen des ersten Materials 26 kommt der Stempel 120 zunächst nur mit dem ersten Material 26 in Kontakt, ähnlich wie bei der zweiten, fünften und sechsten Ausführungsform. Nachdem eine ausreichende Menge des ersten Materials 26 verdrängt ist, kommt der Stempel 120 mit seinem flächigen Mittelbereich mit der oberen Oberfläche der ersten Komponente 10 in Kontakt und drückt diese in Richtung auf das leitfähige dritte Material 30. Durch den somit auf die erste Komponente 10 ausgeübten Druck wird eine stabile elektrische Verbindung der ersten Komponente 10 mit dem dritten Material 30 über die Klebeschicht 34 erreicht. Zusätzlich wird die erste Komponente 10, wie bei den übrigen Ausführungsformen, nach Abkühlung des ersten Materials 26 unterhalb seine Erweichungstemperatur, durch eine von dem ersten Material 26 ausgeübte Kombination aus Formschluss und Klemmkraft fest und druckdicht gehalten. Somit ist das Verfahren der siebten Ausführungsform für die stabile Verbindung elektrischer bzw. mikroelektrischer Komponenten oder generell mikrotechnischer Komponenten, die elektrische Verbindungen benötigen, geeignet. Die erste Komponente 10 kann z. B. als ein Mikroventil ausgebildet sein, das je nach über das dritte Material 30 angelegter Spannung geöffnet oder geschlossen ist, und somit entsprechend einen Fluidfluss durch den Anschluss 18 ermöglicht oder verhindert.

Zur Überprüfung der Stabilität und des Dichteverhaltens der nach dem Verfahren gemäß der Erfindung hergestellten Verbindung wurden temperaturabhängige Testmessungen durchgeführt. Als Testobjekte wurden Verbindung mit ebener oberer Oberfläche (siehe Fig. 9) aus einem unstrukturierten Siliziumchip 10 und einer zweiten Komponente 12 aus verschiedenen einheitlichen thermoplastischen Materialien (Polymethylmethacrylat (PMMA), Polycarbonat (PC), Polyphenylensulfid (PPS), Polyetherimid (PEI)) nach dem Verfahren gemäß der dritten Ausführungsform (Fig. 3) hergestellt.

Der in der zweiten Komponente 12 vorgesehene Anschluss 18 wurde über eine Schlauchverbindung an ein Druckregelventil angeschlossen, durch das der Druck unterhalb des Siliziumchips 10 reguliert wurde. Das Dichteverhalten der Verbindungen wurde gemessen, indem über das Druckregelventil ein Druck von 2 bar an der Unterseite des Siliziumchips 10 angelegt wurde und die Verbindungen während der Testmessungen in ein mit Wasser gefülltes Glasgefäß gehalten wurden. Hierbei diente der Austritt von Luftblasen als erstes Anzeichen einer Undichtigkeit der untersuchten Verbindung. Die Temperaturabhängigkeit des Dichteverhaltens der Verbindungen wurde gemessen, indem das Wasser in dem Glasgefäß mit Hilfe einer Heizplatte langsam erwärmt wurde. Die Wassertemperatur wurde kontinuierlich mit einem elektrischen Temperaturfühler ermittelt. Eine genauere Bestimmung der Leckrate erfolgte mit Hilfe eines Massenflussmessgerätes, welches in Serie zwischen dem Druckregelventil und der zu überprüfenden Verbindung geschaltet wurde.

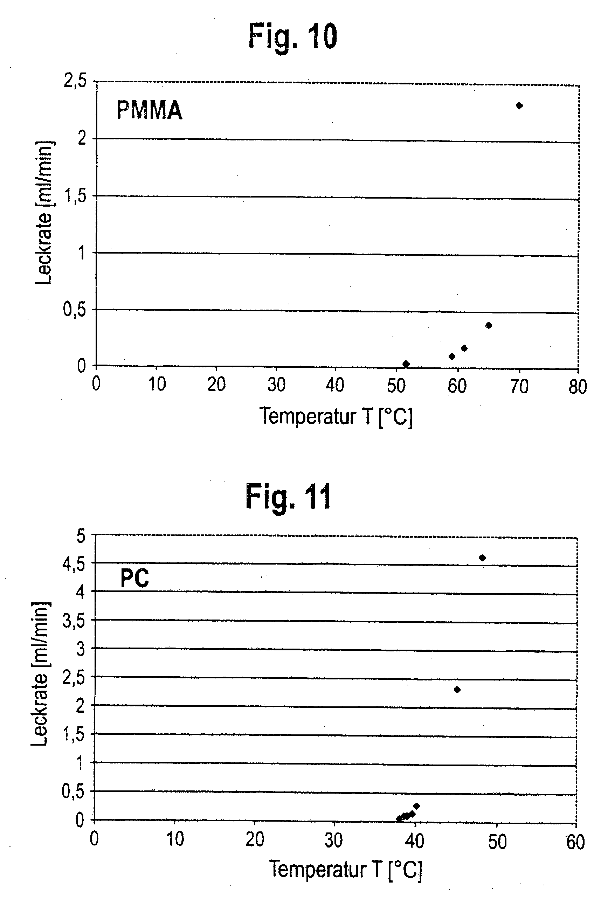

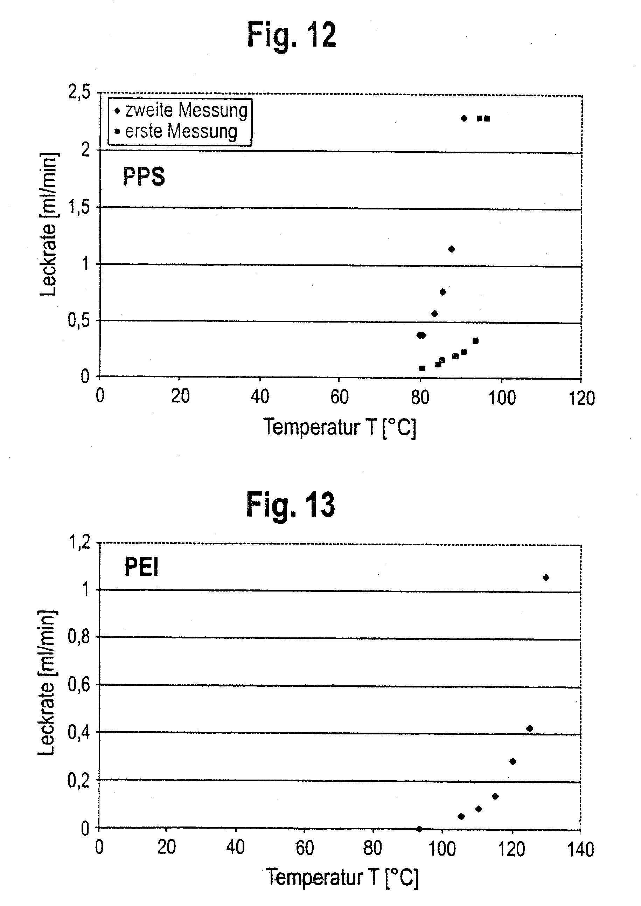

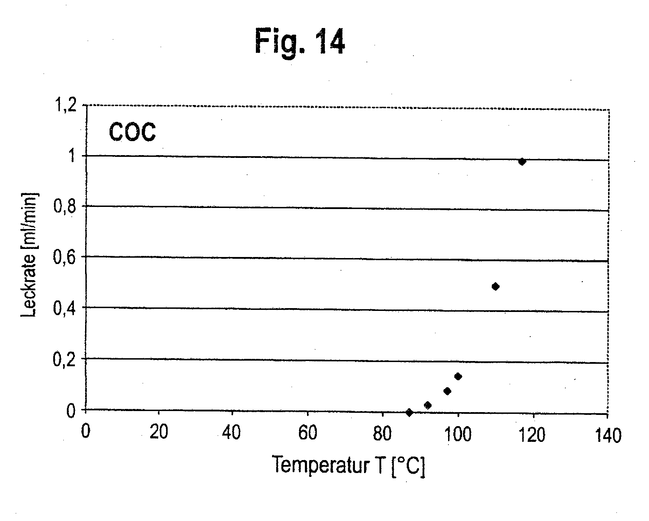

Die Ergebnisse dieser temperaturabhängigen Messungen sind in Figuren 10 bis 14 für Verbindungen mit einer zweiten Komponente 12 aus Polymethylmethacrylat (PMMA, Fig. 10), Polycarbonat (PC, Fig. 11), Polyphenylensulfid (PPS, Fig. 12), Polyetherimid (PEI, Fig. 13), Cyclic-Olefin-Copolymer (COC, Fig. 14) gezeigt. Die gemessenen Daten liefern obere Grenztemperaturen von 47° C (PMMA), 38° C (PC), 72° C (PPS), 90°C (PEI) und 85°C (COC) unterhalb derer die Verbindungen bei einem angelegten Druck von 2 bar druckdicht sind. Somit zeigen die Testmessungen, dass das Verfahren gemäß der Erfindung eine stabile Verbindung zweier Komponenten 10, 12 ermöglicht, die selbst bei erhöhten Drücken und Temperaturen druckdicht ist.

Die Erfindung ist nicht auf die beschriebenen Ausführungsformen begrenzt, sondern.kann im Umfang der folgenden Patentansprüche modifiziert werden.

## Patentansprüche

1. Verfahren zur Verbindung einer ersten Komponente (10) mit einer zweiten Komponente (12), wobei die zweite Komponente (12) ein thermoplastisches Material beinhaltet und das Verfahren die folgenden Schritte umfasst:
- in Kontakt bringen der ersten Komponente (10) mit der zweiten Komponente (12),
- Erwärmen des thermoplastischen Materials der zweiten Komponente (12) zumindest in der Umgebung der ersten Komponente (10) auf eine Temperatur oberhalb der Erweichungstemperatur des thermoplastischen Materials aber unterhalb der Zersetzungstemperatur des thermoplastischen Materials,
- Verdrängen des erwärmten thermoplastischen Materials, so dass eine zumindest formschlüssige Verbindung zwischen der ersten Komponente (10) und der zweiten Komponente (12) entsteht, und
- Abkühlen des thermoplastischen Materials auf eine Temperatur unterhalb seiner Erweichungstemperatur,
wobei sowohl das Erwärmen des thermoplastischen Materials als auch das Verdrängen des erwärmten thermoplastischen Materials durch einen Stempel (20, 120) erfolgt, wobei
das Erwärmen des thermoplastischen Materials durch Wärmeleitung erfolgt, indem der auf eine Temperatur oberhalb der Erweichungstemperatur des thermoplastischen Materials erwärmte Stempel (20, 120) entweder mit der ersten Komponente (10) oder mit der ersten Komponente (10) und der zweiten Komponente (12) in unmittelbaren Kontakt gebracht wird.

2. Verfahren nach Anspruch 1, bei dem die zweite Komponente (12) eine Aussparung (14) aufweist und die erste Komponente (10) zum in Kontakt bringen mit der zweiten Komponente (12) zumindest teilweise in diese Aussparung (14) eingeführt wird.

3. Verfahren nach Anspruch 1 oder 2, bei dem das thermoplastische Material einen größeren Ausdehnungskoeffizienten als das Material der ersten Komponente (10) aufweist.

4. Verfahren nach Anspruch 1 oder 2, bei dem das Erwärmen des thermoplastischen Materials über die zweite Komponente (12) erfolgt.

5. Verfahren nach Anspruch 4, bei dem der Stempel (20, 120) bei dem Erwärmen des thermoplastischen Materials und dem Verdrängen des erwärmten thermoplastischen Materials mit der zweiten Komponente (12) in Kontakt kommt.

6. Verfahren nach einem der vorhergehenden Ansprüche, bei dem die zweite Komponente (12) aus zumindest zwei unterschiedlichen Materialien (26, 28) besteht.

7. Verfahren nach Anspruch 6, bei dem die zumindest zwei Materialien (26, 28) thermoplastische Materialien mit unterschiedlichen Erweichungstemperaturen sind.

8. Verfahren nach Anspruch 7, bei dem nur das Material (26) mit der niedrigeren Erweichungstemperatur auf eine Temperatur oberhalb seiner Erweichungstemperatur erwärmt wird.

9. Verfahren nach Anspruch 6, bei dem nur eines der zumindest zwei Materialien (26, 28) ein thermoplastisches Material ist.

10. Verfahren nach einem der vorhergehenden Ansprüche, bei dem die zweite Komponente (12) ein elektrisch leitfähiges Material (30) enthält, das durch die Verbindung der ersten Komponente (10) mit der zweiten Komponente (12) eine elektrische Verbindung mit der ersten Komponente (10) eingeht.

11. Verfahren nach einem der vorhergehenden Ansprüche, bei dem die erste Komponente (10) aus Silizium oder aus Metall oder aus Glas oder aus Keramik besteht.

12. Verfahren nach einem der vorhergehenden Ansprüche, bei dem die erste Komponente (10) eine mikrofluidische Komponente, vorzugsweise ein Ventil, ist.

## Claims

1. Method for connecting a first component (10) to a second component (12), wherein the second component (12) contains a thermoplastic material and the method comprises the following steps:
- bringing the first component (10) into contact with the second component (12),
- heating the thermoplastic material of the second component (12) at least in the environment of the first component (10) to a temperature above the softening temperature of the thermoplastic material, but below the decomposition temperature of the thermoplastic material,
- displacing the heated thermoplastic material, so that an at least form-locking connection is formed between the first component (10) and the second component (12), and
- cooling the thermoplastic material to a temperature below its softening temperature,
wherein both heating of the thermoplastic material and displacement of the heated thermoplastic material are effected by a stamp (20, 120), wherein
heating of the thermoplastic material is effected by heat conduction, by bringing the stamp (20, 120), which is heated to a temperature above the softening temperature of the thermoplastic material, into direct contact either with the first component (10) or with the first component (10) and the second component (12).

2. Method according to claim 1, in which the second component (12) has a recess (14) and the first component (10) is at least partially introduced into this recess (14) for contacting the second component (12).

3. Method according to claim 1 or 2, in which the thermoplastic material has a greater coefficient of expansion than the material of the first component (10).

4. Method according to claim 1 or 2, in which heating of the thermoplastic material is effected via the second component (12).

5. Method according to claim 4, in which the stamp (20, 120) comes into contact with the second component (12) during heating of the thermoplastic material and displacement of the heated thermoplastic material.

6. Method according to any of the preceding claims, in which the second component (12) is made of at least two different materials (26, 28).

7. Method according to claim 6, in which the at least two materials (26, 28) are thermoplastic materials with different softening temperatures.

8. Method according to claim 7, in which only the material (26) with the lower softening temperature is heated to a temperature above its softening temperature.

9. Method according to claim 6, in which only one of the at least two materials (26, 28) is a thermoplastic material.

10. Method according to any of the preceding claims, in which the second component (12) contains an electrically conductive material (30) which, as a result of the connection of the first component (10) to the second component (12), undergoes an electrical connection to the first component (10).

11. Method according to any of the preceding claims, in which the first component (10) is made of silicon or metal or glass or ceramic.

12. Method according to any of the preceding claims, in which the first component (10) is a microfluidic component, preferably a valve.

## Revendications

1. Procédé de liaison d'un premier composant (10) avec un deuxième composant (12), ledit deuxième composant (12) contenant un matériau thermoplastique et le procédé comprenant les étapes suivantes :
- mise en contact du premier composant (10) avec le deuxième composant (12),
- chauffage du matériau thermoplastique du deuxième composant (12), au moins dans l'environnement du premier composant (10), à une température supérieure à la température de ramollissement du matériau thermoplastique, mais inférieure à la température de décomposition du matériau thermoplastique,
- refoulement du matériau thermoplastique chauffé, de manière à créer une liaison, au moins par complémentarité de forme, entre le premier composant (10) et le deuxième composant (12), et
- refroidissement du matériau thermoplastique à une température inférieure à sa température de ramollissement,
le chauffage du matériau thermoplastique ainsi que le refoulement du matériau thermoplastique chauffé étant réalisés par un poinçon (20, 120),
le chauffage du matériau thermoplastique étant obtenu par conduction de chaleur, le poinçon (20, 120) chauffé à une température supérieure à la température de ramollissement du matériau thermoplastique étant mis directement en contact soit avec le premier composant (10), soit avec le premier composant (10) et le deuxième composant (12).

2. Procédé selon la revendication 1, où le deuxième composant (12) présente une cavité (14) et où le premier composant (10) est au moins partiellement inséré dans cette cavité (14) pour être mis en contact avec le deuxième composant (12).

3. Procédé selon la revendication 1 ou 2, où le matériau thermoplastique présente un coefficient de dilatation supérieur à celui du matériau du premier composant (10).

4. Procédé selon la revendication 1 ou 2, où le chauffage du matériau thermoplastique est réalisé au moyen du deuxième composant (12).

5. Procédé selon la revendication 4, où le poinçon (20, 120) entre en contact avec le deuxième composant (12) lors du chauffage du matériau thermoplastique et du refoulement du matériau thermoplastique chauffé.

6. Procédé selon l'une des revendications précédentes, où le deuxième composant (12) est constitué d'au moins deux matériaux (26, 28) différents.

7. Procédé selon la revendication 6, où les deux matériaux au moins (26, 28) sont des matériaux thermoplastiques à températures de ramollissement différentes.

8. Procédé selon la revendication 7, où seul le matériau (26) à température de ramollissement inférieure est chauffé à une température supérieure à sa température de ramollissement.

9. Procédé selon la revendication 6, où un seul des deux matériaux au moins (26, 28) est un matériau thermoplastique.

10. Procédé selon l'une des revendications précédentes, où le deuxième composant (12) contient un matériau (30) conducteur électrique, qui réalise une liaison électrique avec le premier composant (10) par liaison du premier composant (10) avec le deuxième composant (12).

11. Procédé selon l'une des revendications précédentes, où le premier composant (10) est constitué de silicium ou de métal ou de verre ou de céramique.

12. Procédé selon l'une des revendications précédentes, où le premier composant (10) est un composant microfluidique, préférentiellement une valve.
